(19) Europäisches Patentamt
European Patent Office
Office européen des brevets

(11) Publication number: **0 168 652**
**A2**

# (12) EUROPEAN PATENT APPLICATION

(21) Application number: **85107466.6**

(22) Date of filing: **14.06.85**

(51) Int. Cl.⁴: **C 08 L 71/04**, C 08 L 21/00, C 08 L 23/16, C 08 L 23/00

(30) Priority: **18.06.84 US 621821**

(43) Date of publication of application: **22.01.86 Bulletin 86/4**

(84) Designated Contracting States: **DE FR GB IT NL**

(71) Applicant: **GENERAL ELECTRIC COMPANY, 1 River Road, Schenectady New York 12305 (US)**

(72) Inventor: **Campbell, John Robert, 41 Pepper Hollow, Clifton Park New York (US)**
Inventor: **Conroy, Paul Michael, 28 Richmond, Troy New York (US)**

(74) Representative: **Catherine, Alain, General Electric - Deutschland Munich Patent Operations Frauenstrasse 32, D-8000 München 5 (DE)**

## (54) Polyphenylene oxide blends containing ionomeric rubbers.

(57) Polymer blends having improved impact resistance and structural integrity comprise at least one polyphenylene oxide, at least one elastomer containing highly polar ionic (e.g., sulfonate) substituents, such as a sulfonated EPDM rubber; and at least one plasticizer.

EP 0 168 652 A2

# POLYPHENYLENE OXIDE BLENDS CONTAINING IONOMERIC RUBBERS

This invention relates to polyphenylene oxide compositions having improved impact properties.

Polyphenylene oxides (also known as polyphenylene ethers) have found wide use as engineering resins. Their durability and strength has made them suitable for use in areas previously reserved for metals. The necessity for high performance in these areas requires continuing development in the direction of improving properties such as impact resistance and structural integrity.

The impact resistance and ease of processing of polyphenylene oxides has frequently been improved by the incorporation therein of a minor proportion of an elastomer such as an EPDM rubber, in combination with one or more plasticizers. It is sometimes found, however, that resinous compositions of this type undergo environmental stress-cracking during and after molding. They may also undergo delamination because of the limited compatibility of the constituents.

A principal object of the present invention, therefore, is to provide novel polyphenylene oxide blends.

A further object is to improve the impact resistance of polyphenylene oxides without introducing other problems such as environmental stress-cracking and delamination.

Other objects will in part be obvious and will in part appear hereinafter.

In its broadest aspect, the present invention is directed to polymer compositions comprising:

(A) a major proportion of at least one polyphenylene oxide;

(B) a minor proportion, effective to increase impact resistance, of at least one elastomer containing highly polar ionic substituents; and

(C) a minor proportion of at least one plasticizer.

Component A, the principal polymeric component of the compositions of this invention, is at least one polyphenylene oxide. As is well known in the art, polyphenylene oxides are prepared by the oxidative coupling of phenols, particularly those having the formula

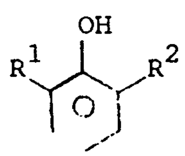 ,

wherein $R^1$ is a lower primary alkyl group and $R^2$ is a lower primary or secondary alkyl group, the word "lower" meaning that it contains up to 7 carbon atoms. Examples of lower primary alkyl groups are methyl, ethyl, n-propyl, n-butyl, isobutyl, n-amyl, isoamyl, 2-methylbutyl, n-hexyl, 2,3-dimethylbutyl, 2-, 3- and 4-methylpentyl and the corresponding heptyl groups. Examples of lower secondary alkyl groups are

isopropyl, sec-butyl and 2-pentyl. Preferably, $R^1$ and $R^2$ are straight chain rather than branched. Since the polyphenylene oxides in which $R^1$ and $R^2$ are other than methyl generally have no more desirable properties than those in which $R^1$ and $R^2$ are both methyl, and since 2,6-xylenol is the most readily available and cheapest 2,6-dialkylphenol, its use is preferred. The polyphenylene oxide obtained is then poly(2,6-dimethyl-1,4-phenylene oxide).

The polyphenylene oxides useful as component A include those containing substituents on the aromatic rings, as well as coupled polyphenylene oxides in which the coupling agent is reacted with the hydroxy groups of two polyphenylene oxide chains to increase the molecular weight of the polymer. Illustrative coupling agents are low molecular weight polycarbonates, quinones, heterocycles and formals. Polyphenylene oxides of these types are known in the art and are disclosed in a large number of patents, including the following:

| | | | |
|---|---|---|---|
| 3,226,361 | 3,318,959 | 3,733,307 | 4,226,951 |
| 3,234,183 | 3,330,806 | 3,875,256 | 4,334,050 |
| 3,262,892 | 3,390,125 | 4,054,533 | 4,340,696 |
| 3,262,911 | 3,431,238 | 4,140,675 | 4,345,050 |
| 3,268,478 | 3,432,466 | 4,158,728 | 4,345,051 |
| 3,036,874 | 3,546,174 | 4,207,406 | 4,374,959 |
| 3,036,875 | 3,703,564 | 4,221,881 | 4,377,662 |

The disclosures of the above-listed patents are incorporated by reference herein.

The average molecular weights (number average whenever used herein) of the polyphenylene oxides are generally about 5,000-40,000.

Component B, the impact resistance-increasing ingredient in the compositions of this invention, is at least one elastomer containing highly polar ionic substituents; i.e., substituents with high charge density. Said substituent and elastomer are hereinafter sometimes referred to as "ionomeric substituent" and "ionomeric elastomer", respectively.

The ionomeric substituents are acidic or strongly basic groups, most often acidic, or salts thereof. Examples are sulfonic acid (which is preferred), phosphorus acid and quaternary ammonium base groups and their salts which are stable at the processing temperatures of the compositions of this invention. Mixtures of any of the foregoing substituents are also suitable. Methods for their introduction into the elastomers, herein designated "ionomerization", are described hereinafter.

In general, it is preferred for at least part (typically at least about 35% and frequently all) of the ionomeric groups to be in the salt form. Examples of suitable acid salts are metal, ammonium, alkylammonium, phosphonium and alkylphosphonium. The metal salts, which are preferred, are illustrated by alkali metal, alkaline earth metal and zinc; sodium and zinc are especially preferred. Typical base salts are the chlorides, bromides, sulfates, sulfonates and phosphonates; the latter two may be either aliphatic or aromatic.

A characteristic property of the ionomeric elastomers is their "degree of ionomerization", which is defined as the mole percent of ionomeric groups based on mers in the polymer; in other words, as the number of ionomeric mers per

100 mers. The degree of ionomerization of component B which is preferred for the purposes of this invention is within the range of about 0.1-10%, especially about 0.25-5%.

The base elastomer for component B may be any elastomer known in the art. Examples thereof are provided in Encyclopedia of Polymer Science and Technology, Vol. 5, pp. 406-482 (1966), the disclosure of which is incorporated by reference herein.

The preferred elastomers are those having a carbon atom backbone; that is, those in which the polymer chain consists entirely of carbon atoms. These are usually substantially free, and preferably entirely free, from aromatic moieties. They include natural rubber, synthetic diene rubbers such as polybutadiene and polyisoprene, butyl rubbers, polyisobutene rubbers, ethylene-propylene rubbers, ethylene-propylene-diene rubbers wherein the diene is non-conjugated (EPDM rubbers), chloroprene rubbers, and others known in the art. The molecular weights of said rubbers, before ionomerization, are typically about 10,000-250,000 and most often about 20,000-100,000.

The ionomerization of the above-described elastomers may be effected by known methods. For example, sulfonated rubbers may be obtained by polymerization of a monomer mixture which includes a sulfonate monomer such as 2-sulfoethyl methacrylate, sodium styrenesulfonate or 2-acrylamido-2-methylpropanesulfonic acid. They may also be prepared as disclosed in U.S. Patent 3,642,728, the disclosure of which is incorporated by reference herein. White phosphorus reacts with olefins in the presence of oxygen to yield phosphonic acids, and elastomeric phosphonate ionomers may be

obtained by subjecting diene rubbers containing olefinic linkages to this reaction. Quaternary ammonium-ionomerized rubbers may be prepared by reacting a chlorinated derivative of a rubber, or a chloroprene rubber, with ammonia or an amine followed by quaternization.

Any of the foregoing acidic or basic substituents may be converted to their salts by known methods, typically by reaction with a base or acid, respectively.

The glass transition temperature (Tg) of the ionomeric elastomer should be quite low. It is generally no higher than -20°C and preferably below about -40°C.

Component C is at least one plasticizer, whose presence facilitates molding and other working operations by lowering the melt viscosity of the composition.

A wide variety of plasticizers are suitable for use as component C. In general, they are polar materials melting no higher than about 190°C. It is also preferred that their volatility be sufficiently low to permit their retention in the composition during processing.

Typical plasticizers include compounds containing at least one of oxygen, phosphorus and nitrogen atoms, and compounds releasing a small polar molecule such as water or methanol at elevated temperatures. In addition to serving as plasticizers, compounds containing phosphorus may act as flame retardant additives.

Examples of oxygen-containing materials are organic acids and their salts and esters such as stearic

acid, lauric acid, calcium stearate, zinc laurate, zinc stearate, magnesium laurate, aluminum ricinoleate, dimethyl sebacate and dimethyl phthalate; and alcohols, phenols and ethers such as hexyl, alcohol, nonylphenol, resorcinol, benzyl alcohol and ethyl hexyl ether.

Illustrative phosphorus-containing compounds are triphenyl phosphate, tri-p-tolyl phosphate, tris(3,5-dimethylphenyl) phosphate, tributyl phosphate, triisopropyl phosphate and tetraalkylphosphonium p-toluenesulfonate. Nitrogen-containing materials include stearamide, p-toluenesulfonamide, diphenylurea, diphenylguanidine, di-o-tolylguanidine, piperazine, aniline, dihexylamine, diphenylamine, phenyl-β-naphthylamine and tetraalkylammonium p-toluenesulfonate.

Polar molecule-releasing materials include various hydrates of simple and mixed oxides and salts such as lithium sulfate dihydrate, ammonium cerium sulfate octahydrate, ammonium chromium (III) sulfate dodecahydrate, ferric ammonium sulfate dodecahydrate, barium oxide octahydrate, bismuth dioxide dihydrate and the like, and alcoholates such as calcium chloride tetramethanolate.

The preferred plasticizers are triaryl phosphates and the metal (especially zinc) salts of fatty acids. In most instances a combination of the two is used, typically containing about 40-70% by weight triaryl phosphate with the balance being metal salt.

The amount of component B in the compositions of this invention may be any amount effective to provide the desired degree of impact resistance. The amount of

component C is an amount effective to lower the melt viscosity to the desired level. While it is within the scope of the invention for component B to be soluble in component A, solubility is not necessary and is frequently unattainable.

In general, the compositions of the invention comprise component A in the amount of about 75-98% by weight and component B in the amount of about 2-25%, both based on total resinous components, and about 3-30 phr. (parts by weight per 100 parts of resinous components) of component C. Most often, the compositions contain about 85-95% of component A, about 5-15% of component B and about 15-25 phr. of component C.

While the presence of a plasticizer in the compositions of this invention is essential for the aforementioned purposes, the level thereof should generally be no higher than necessary since tensile strength tends to decrease with increasing plasticizer level. One advantage of using a zinc salt as component B, rather than a salt containing another cation such as sodium, is that it frequently enables one to use a lower level of plasticizer, thus increasing tensile strength.

The compositions of this invention are normally prepared by merely blending the ingredients thereof under conditions adapted for the formation of an intimate blend. Such conditions often include extrusion, typically at temperatures in the range of about 100-300°C. Extrusion is typically effected in a screw-type or similar extruder which applies a substantial shearing force to the composition, thereby decreasing the particle size thereof.

In addition to the ingredients described in detail herein, the compositions of this invention can also contain other materials such as fillers, pigments, ultraviolet stabilizers, anti-static agents and mold release agents. Materials useful for these purposes, and the proportions useful in the compositions of this invention, will be apparent to those skilled in the art.

The preparation of the compositions of this invention is illustrated by the following examples. All parts and percentages except degree of ionomerization are by weight.

## EXAMPLES 1-4

Component A was a poly-(2,6-dimethyl-1,4-phenylene oxide) having a molecular weight of about 20,000 and an intrinsic viscosity in chloroform at 25°C of 0.48 dl./g. Component B was "Uniroyal IE-2590", a commercially available zinc salt of a sulfonated EPDM rubber having a molecular weight of about 50,000 and containing an average of 13 sulfonate groups per molecule, for a degree of ionomerization of about 0.86%. It has a Tg of about -60°C.

The compositions were prepared by blending the appropriate proportions of components A, B and C, mixing in a jar mill for 2 hours and extruding on a twin screw extruder at about 160-260°C. The extruded material was quenched in water, pelletized and dried at 80°C. Test specimens were then prepared by injection molding and tested for Izod impact (ASTM procedure D256), compared with a control in which component B was absent. The fracture surfaces of the specimens after the Izod test were visually inspected for

delamination; no substantial delamination was observed for Examples 1-4.

The compositional and test data for Examples 1-4 are listed in the following table.

| Ingredient | Examples 1 | 2 | 3 | 4 | Control |
|---|---|---|---|---|---|
| Component A, % of total resins | 94.7 | 89.5 | 90.0 | 90.2 | 100 |
| Component B, % of total resins | 5.3 | 10.5 | 10.0 | 9.8 | --- |
| Component C, phr. | 5.3 | 10.6 | 20.0 | 24.4 | 5.3 |
| Triphenyl phosphate | --- | 5.3 | 15.0 | 14.6 | 5.3 |
| Zinc stearate | 5.3 | 5.3 | 5.0 | 9.8 | --- |
| Impact strength, ft.-lb./in. | 0.6 | 2.5 | 9.1 | 10.2 | 0.6 |

It is apparent that the compositions of this invention are superior in impact strength to compositions containing only components A and C. The superior impact strength of compositions in which component C is present in the preferred proportions of 15-25 phr. is also evident from a comparison of Examples 3-4 with Examples 1-2.

What is claimed is:

1. A polymer composition comprising:

(A) a major proportion of at least one polyphenylene oxide;

(B) a minor proportion, effective to increase impact resistance, of at least one elastomer containing highly polar ionic substituents; and

(C) a minor proportion of at least one plasticizer.

2. A composition according to claim 1 wherein component A has a number average molecular weight of about 5,000-40,000.

3. A composition according to claim 2 wherein component A is a poly(2,6-dimethyl-1,4-phenylene oxide).

4. A composition according to claim 1 wherein component B has a carbon atom backbone and the substituents thereon are selected from the group consisting of sulfonic acid, phosphorus acid and quaternary ammonium base substituents and salts thereof.

5. A composition according to claim 4 wherein the substituents on component B are sulfonate substituents.

6. A composition according to claim 5 wherein component B is substantially free from aromatic moieties and its degree of ionomerization is about 0.1-10%.

7. A composition according to claim 6 wherein component B has a molecular weight of about 10,000-250,000 and a glass transition temperature no higher than about -20°C.

8. A composition according to claim 7 wherein component B is entirely free from aromatic moieties and the degree of ionomerization thereof is about 0.25-5%.

9. A composition according to claim 8 wherein the substituents on component B are zinc or sodium sulfonate substituents.

10. A composition according to claim 9 wherein component B is a sulfonated EPDM rubber.

11. A composition according to claim 10 wherein the substituents on component B are zinc sulfonate substituents.

12. A composition according to claim 1, which comprises component A in the amount of about 75-98% by weight and component B in the amount of about 2-25%, both based on total resinous components, and component C in the amount of about 3-30 phr.

13. A composition according to claim 12 which comprises component A in the amount of about 85-95% component B in the amount of about 5-15%, and component C in the amount of about 15-25 phr.

14. A composition according to claim 1 wherein component C is a polar material melting no higher than about 190°C.

15. A composition according to claim 14 wherein component C contains at least one of oxygen, phosphorus and nitrogen atoms or releases a small polar molecule at elevated temperatures.

16. A composition according to claim 15 wherein component C is at least one of triaryl phosphates and metal salts of fatty acids.

17. A composition according to claim 16 wherein component C is a combination of about 40-70% by weight triaryl phosphate with the balance being zinc salts of said fatty acids.

18. A composition according to claim 17 wherein the zinc salt is zinc stearate.

WHP:kab